# EUROPEAN PATENT APPLICATION

(11) **EP 4 289 881 A1**
(43) Date of publication of application: **13.12.2023**
(21) Application number: 22749763.3
(22) Date of filing: 02.02.2022
(51) Int. Cl.: C08G 59/22, C08G 18/00, C08G 18/38, C08G 18/52, C08G 75/08, G02B 1/04

(54) **POLYMERIZABLE COMPOSITION, RESIN, MOLDED ARTICLE, OPTICAL MATERIAL, AND LENS**

(30) Priority: 05.02.2021 JP 2021017406; 29.07.2021 JP 2021124416
(71) Applicant: Mitsui Chemicals, Inc., Tokyo 104-0028 (JP)
(72) Inventor: NUKUI, Marina, Omuta-shi, Fukuoka 836-8610 (JP)
(74) Representative: Mewburn Ellis LLP
(86) International application number: PCT/JP2022/004138
(87) International publication number: WO 2022/168892

(57) **Abstract**

A polymerizable composition comprising: an episulfide compound represented by the following Formula (1); a polyiso(thio)cyanate compound; a polythiol compound; and an epoxy compound (X) which contains one or more epoxy groups within one molecule, and which does not contain an episulfide group. In Formula (1), Y represents a substituted or unsubstituted linear hydrocarbon group having from 1 to 4 carbon atoms, a substituted or unsubstituted branched hydrocarbon group having from 2 to 4 carbon atoms, a substituted or unsubstituted cyclic hydrocarbon group having from 3 to 6 carbon atoms, a substituted or unsubstituted 1,4-dithiane group, a substituted or unsubstituted arylene group, or a substituted or unsubstituted aralkylene group; m represents an integer from 0 to 2; and n represents an integer from 0 to 3:

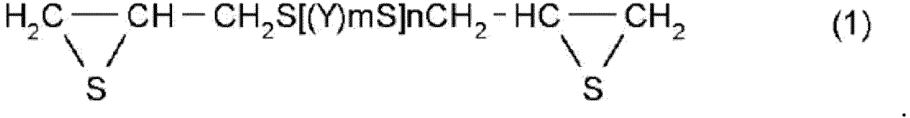

## Description

### Technical Field

The present disclosure relates to a polymerizable composition, a resin, a formed body, an optical material, and lens.

### Background Art

Plastic lenses are rapidly gaining popularity in applications such as eyeglass lenses, camera lenses, and the like, in recent years, due to having a lighter weight and being less susceptible to cracking as compared to inorganic lenses, and being dyeable.

As raw materials for plastic lenses, various examinations have been done in recent years on compositions for forming resins which compositions contain episulfide compounds.

For example, Patent Document 1 aims to develop means for controlling the polymerization velocity and improving the heat resistance, of a resin optical material which has a sufficiently high refractive index and a favorable Abbe number, and discloses a composition for forming a resin which composition includes: a compound (namely, a specific episulfide compound) having a specific thiirane ring; a compound having one or more epoxy groups within one molecule; and a polymerization catalyst.

Patent Document 1: Japanese Patent Application Laid-Open (JP-A) No. 2005-298742

### SUMMARY OF THE INVENTION

### Technical Problem

However, there is a case in which a resin obtained from a composition for forming a resin (hereinafter, also referred to as "polymerizable composition") which composition contains an episulfide compound is required to have a further improved strength while retaining a high refractive index.

An object of one embodiment of the present disclosure is to provide a polymerizable composition capable of producing a resin which has a high refractive index and an excellent strength, as well as a resin, a formed body, an optical material, and a lens which have a high refractive index and an excellent strength.

### Solution to Problem

Means for solving the above-mentioned problem include the following embodiments.
<1> A polymerizable composition comprising:
   an episulfide compound represented by the following Formula (1);
   a polyiso(thio)cyanate compound;
   a polythiol compound; and
   an epoxy compound (X) which contains one or more epoxy groups within one molecule, and which does not contain an episulfide group: 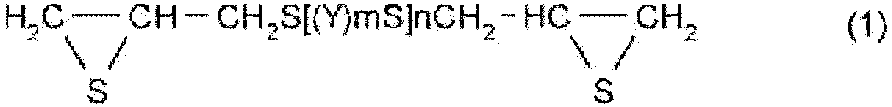
   wherein, in Formula (1), Y represents a substituted or unsubstituted linear hydrocarbon group having from 1 to 4 carbon atoms, a substituted or unsubstituted branched hydrocarbon group having from 2 to 4 carbon atoms, a substituted or unsubstituted cyclic hydrocarbon group having from 3 to 6 carbon atoms, a substituted or unsubstituted 1,4-dithiane group, a substituted or unsubstituted arylene group, or a substituted or unsubstituted aralkylene group; m represents an integer from 0 to 2; and n represents an integer from 0 to 3.
<2> The polymerizable composition according to <1>, wherein the epoxy compound (X) comprises an epoxy compound (X1) which contains two or more epoxy groups within one molecule.
<3> The polymerizable composition according to <1> or <2>, wherein a ratio (Ms - M_{N})/M_{E} is more than 0 but equal to or less than 0.20, when:
   a total number of moles of mercapto groups contained in a total amount of the polythiol compound is defined as Ms;
   a total number of moles of iso(thio)cyanate groups contained in a total amount of the polyiso(thio)cyanate compound is defined as M_{N}; and
   a total number of moles of episulfide groups contained in a total amount of the episulfide compound represented by Formula (1) is defined as M_{E}.
<4> The polymerizable composition according to any one of <1> to <3>, wherein the polythiol compound comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11 -dimercapto-3,6,9-trithiaundecane, 4-mercaptomethyl-1,8-dimercapto-3,6-dithiaoctane, 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.
<5> The polymerizable composition according to any one of <1> to <4>, wherein the polyiso(thio)cyanate compound comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.
<6> The polymerizable composition according to any one of <1> to <5>, further comprising a compound represented by the following Formula (2):

   (R¹)₄Y⁺X⁻ (2)

   wherein, in Formula (2), each of four R¹s independently represents a linear hydrocarbon group having from 1 to 10 carbon atoms or a branched hydrocarbon group having from 3 to 10 carbon atoms; X represents a halogen atom; and Y represents a nitrogen atom or a phosphorus atom.
<7> The polymerizable composition according to any one of <1> to <6>, further comprising a tertiary amine compound.
<8> The polymerizable composition according to <7>, wherein the tertiary amine compound comprises at least one of a compound represented by the following Formula (3) or a compound represented by the following Formula (4): 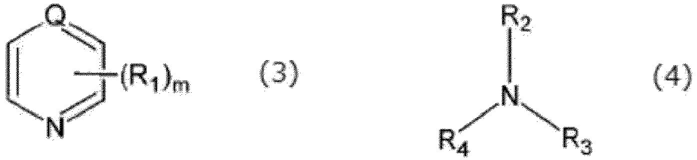
   wherein, in Formula (3), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom, a nitrogen atom, or an oxygen atom; and m represents an integer from 0 to 5; and
   wherein, in Formula (4), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group; and R₂ and R₃ may be bonded to each other to form a ring.
<9> The polymerizable composition according to <8>,
   wherein the compound represented by Formula (3) is at least one selected from the group consisting of 2-methylpyrazine, pyridine, α-picoline, β-picoline, γ-picoline, 2,6-lutidine, 3,5-lutidine, 2,4,6-trimethylpyridine, 3-chloropyridine, 2-ethylpyridine, and 3-ethylpyridine; and
   wherein the compound represented by Formula (4) is at least one selected from the group consisting of triallylamine and trioctylamine.
<10> The polymerizable composition according to any one of claims 1 to 9, further comprising a Lewis acid compound.
<11> The polymerizable composition according to <10>, wherein the Lewis acid compound comprises a compound represented by the following Formula (5):

   (R₄)_{c}-Sn-X_{4-c} (5)

   wherein, in Formula (5), R₄ represents an alkyl group having from 1 to 4 carbon atoms; X represents a fluorine atom, a chlorine atom, a bromine atom, or -O-C(=O)-Rs wherein R₅ represents an alkyl group having from 1 to 11 carbon atoms; and c represents an integer from 1 to 3.
<12> The polymerizable composition according to claim 11, wherein the compound represented by Formula (5) is at least one selected from the group consisting of dimethyltin dichloride, dibutyltin dichloride, and dibutyltin dilaurate.
<13> A resin which is a cured product of the polymerizable composition according to any one of <1> to <12>.
<14> A formed body comprising the resin according to <13>.
<15> An optical material comprising the resin according to <13>.
<16> A lens comprising the resin according to <13>.

### Advantageous Effects of Invention

One embodiment of the present disclosure provides a polymerizable composition capable of producing a resin which has a high refractive index and an excellent strength, as well as a resin, a formed body, an optical material, and a lens which have a high refractive index and an excellent strength.

### DESCRIPTION OF EMBODIMENTS

In the present disclosure, any numerical range indicated using an expression "from * to" refers to a range in which numerical values described before and after the "to" are included as a lower limit value and an upper limit value, respectively.

In the present disclosure, the amount of each component in a composition, in a case in which a plurality of substances corresponding to each component are present in the composition, refers to the total amount of the plurality of substances present in the composition, unless otherwise specified.

In a numerical range described in stages, in the present disclosure, the upper limit value or the lower limit value described in one numerical range may be replaced with the upper limit value or the lower limit value of another numerical range described in stages. Further, in a numerical range described in the present disclosure, the upper limit value or the lower limit value of the numerical range may be replaced with a value shown in Examples.

### [Polymerizable Composition]

A polymerizable composition according to the present disclosure contains:
an episulfide compound represented by Formula (1) to be described later;
a polyiso(thio)cyanate compound;
a polythiol compound; and
an epoxy compound (X) which contains one or more epoxy groups within one molecule, and which does not contain an episulfide group.

The polymerizable composition according to the present disclosure allows for producing a resin which has a high refractive index and an excellent strength.

The high refractive index of the resin is thought to be an effect provided by the episulfide compound (1) represented by Formula (1) to be described later.

The strength of the resin is thought to be an effect provided by the polyiso(thio)cyanate compound, the polythiol compound, and the epoxy compound (X).

The respective components which can be contained in the polymerizable composition according to the present disclosure will be described below.

### < Episulfide Compound Represented by Formula (1) >

The polymerizable composition according to the present disclosure contains at least one kind of episulfide compound represented by the following Formula (1):

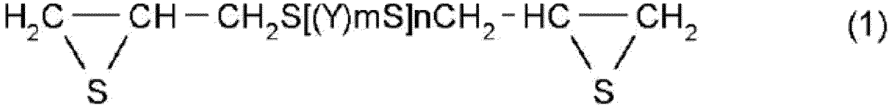

In Formula (1), Y represents a substituted or unsubstituted linear hydrocarbon group having from 1 to 4 carbon atoms, a substituted or unsubstituted branched hydrocarbon group having from 2 to 4 carbon atoms, a substituted or unsubstituted cyclic hydrocarbon group having from 3 to 6 carbon atoms, a substituted or unsubstituted 1,4-dithiane group, a substituted or unsubstituted arylene group, or a substituted or unsubstituted aralkylene group; m represents an integer from 0 to 2; and n represents an integer from 0 to 3.

Examples of the substituted or unsubstituted linear hydrocarbon group having from 1 to 4 carbon atoms and the substituted or unsubstituted branched hydrocarbon group having from 2 to 4 carbon atoms, each represented by Y, include: unsubstituted alkylene groups such as methylene group, ethylene group, 1,2-propylene group, 1,3-propylene group, 1,2-butylene group, 1,3-butylene group, and 1,4-butylene group; and groups obtained by substituting the unsubstituted alkylene groups described above with a substituent such as an alkyl group, a hydroxyl group, a mercapto group, a carbonyl group, or a thiocarbonyl group.

Examples of the substituted or unsubstituted cyclic hydrocarbon group having from 3 to 6 carbon atoms, represented by Y, include: unsubstituted cyclic alkylene groups such as cyclopropylene group, 1,2-cyclobutylene group, 1,3-cyclobutylene group, 1,2-cyclopentylene group, 1,3-cyclopentylene group, 1,2-cyclohexylene group, 1,3-cyclohexylene group, and 1,4-cyclohexylene group; and groups obtained by substituting the unsubstituted cyclic alkylene groups described above with a substituent such as an alkyl group, a hydroxyl group, a mercapto group, a carbonyl group, or a thiocarbonyl group.

Examples of the substituted or unsubstituted 1,4-dithiane group, represented by Y, include: unsubstituted 1,4-dithiane groups represented by the following Formula; and groups obtained by substituting the unsubstituted 1,4-dithiane groups described above with a substituent such as an alkyl group or a hydroxyl group.

Each symbol "*" in the following Formula represents a binding position.

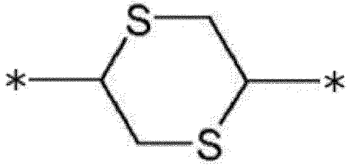

Examples of the substituted or unsubstituted arylene group, represented by Y, include: unsubstituted arylene groups such as phenylene group and naphthylene group; and groups obtained by substituting the unsubstituted arylene groups described above with a substituent such as an alkyl group, a hydroxyl group, a mercapto group, a carbonyl group, or a thiocarbonyl group.

Examples of the substituted or unsubstituted aralkylene group, represented by Y, include: unsubstituted aralkylene groups such as benzylene and phenethylene; and groups obtained by substituting the unsubstituted aralkylene groups described above with a substituent such as an alkyl group, a hydroxyl group, a mercapto group, a carbonyl group, or a thiocarbonyl group.

In Formula (1), m represents an integer from 0 to 2.
m is preferably 0 or 1, and more preferably 0.

In Formula (1), n represents an integer from 0 to 3.
n is preferably 0 or 1.

For example, the description in paragraphs 0025 to 0038 of JP-A No. 2005-272778 can be referred to as appropriate, regarding the episulfide compound represented by Formula (1).

The polymerizable composition preferably contains, as the episulfide compound represented by Formula (1), at least one compound (hereinafter, also referred to as "episulfide compound (E1)") selected from the group consisting of
bis(2,3-epithiopropyl)sulfide;
bis(2,3-epithiopropylthio)methane;
bis(2,3-epithiopropylthio)ethane;
3,8-bis(2,3-epithiopropylthio)-3,6-dithiaoctane; and
bis(2,3-epithiopropyl)disulfide; and
more preferably contains at least one compound (hereinafter, also referred to as "episulfide compound (E2)") selected from the group consisting of bis(2,3-epithiopropyl)sulfide and bis(2,3-epithiopropyl)disulfide.

In the polymerizable composition, the proportion of the episulfide compound (E1) in the total amount of the episulfide compound represented by Formula (1) is preferably from 50% by mass to 100% by mass, more preferably from 60% by mass to 100% by mass, and still more preferably from 80% by mass to 100% by mass.

In the polymerizable composition, a preferred range of the proportion of the episulfide compound (E2) in the total amount of the episulfide compound represented by Formula (1) is the same as the preferred range of the proportion of the episulfide compound (E1) in the total amount of the episulfide compound represented by Formula (1).

The content of the episulfide compound represented by Formula (1) with respect to the total amount of the polymerizable composition according to the present disclosure is preferably 30% by mass or more, and more preferably 40% by mass or more, because the resulting resin has a better refractive index.

The content of the episulfide compound represented by Formula (1) with respect to the total amount of the polymerizable composition according to the present disclosure is preferably 85% by mass or less, more preferably 80% by mass or less, and still more preferably 70% by mass or less, from the viewpoint of further improving the strength and color of the resulting resin.

The content of the episulfide compound represented by Formula (1) with respect to the total amount of the polymerizable composition according to the present disclosure may preferably be, for example, within a range of from 30% by mass to 85% by mass.

### < Polyiso(thio)cyanate Compound >

The polymerizable composition according to the present disclosure contains at least one kind of polyiso(thio)cyanate compound.

In the present disclosure, the "polyiso(thio)cyanate compound" refers to a compound which contains two or more iso(thio)cyanate groups within one molecule.

In the present disclosure, the "iso(thio)cyanate group" refers to isocyanate group or isothiocyanate group.

For example, the description in paragraphs 0049 to 0051 of JP-A No. 2005-272778 can be referred to as appropriate, regarding the polyiso(thio)cyanate compound.

The polyiso(thio)cyanate compound in the polymerizable composition according to the present disclosure particularly preferably includes at least one compound (hereinafter, referred to as "polyisocyanate compound N1") selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

In the polymerizable composition, the proportion of the polyisocyanate compound N1 in the total amount of the polyiso(thio)cyanate compound is preferably from 50% by mass to 100% by mass, more preferably from 60% by mass to 100% by mass, and still more preferably from 80% by mass to 100% by mass.

The content of the polyiso(thio)cyanate compound with respect to the total amount of the polymerizable composition according to the present disclosure is preferably 2% by mass or more, more preferably 5% by mass or more, and still more preferably 10% by mass or more, from the viewpoint of further improving the Abbe number, the color and the strength of the resulting resin.

The content of the polyiso(thio)cyanate compound with respect to the total amount of the polymerizable composition according to the present disclosure is preferably 50% by mass or less, more preferably 40% by mass or less, and still more preferably 30% by mass or less, because the resulting resin has a better refractive index.

The content of the polyiso(thio)cyanate compound with respect to the total amount of the polymerizable composition according to the present disclosure may preferably be, for example, within a range of from 2% by mass to 50% by mass.

### < Polythiol Compound >

The polymerizable composition according to the present disclosure contains at least one kind of polythiol compound.

In the present disclosure, the "polythiol compound" refers to a compound which contains two or more mercapto groups (namely, thiol groups) within one molecule.

In the present disclosure, two or more kinds of polythiol compounds are sometimes collectively referred to as "polythiol composition".

For example, the description in paragraphs 0039 to 0048 of JP-A No. 2005-272778 can be referred to as appropriate, regarding the polythiol compound.

The polythiol compound in the polymerizable composition according to the present disclosure preferably includes at least one compound (hereinafter, also referred to as "polythiol compound S1") selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

In the polymerizable composition, the proportion of the polythiol compound S1 (namely, in a case in which the polythiol compound S1 is composed of two or more kinds of compounds, the proportion of the total content of the two or more kinds of compounds) in the total amount of the polythiol compound is preferably from 50% by mass to 100% by mass, more preferably from 60% by mass to 100% by mass, and still more preferably from 80% by mass to 100% by mass.

The content of the polythiol compound with respect to the total amount of the polymerizable composition according to the present disclosure is preferably 5% by mass or more, more preferably 10% by mass or more, and still more preferably 15% by mass or more, from the viewpoint of further improving the color and the strength of the resulting resin.

The content of the polythiol compound with respect to the total amount of the polymerizable composition according to the present disclosure is preferably 60% by mass or less, more preferably 50% by mass or less, and still more preferably 40% by mass or less, because the resulting resin has a better refractive index and heat resistance.

The content of the polythiol compound with respect to the total amount of the polymerizable composition according to the present disclosure may preferably be, for example, within a range of from 5% by mass to 60% by mass.

### < Epoxy Compound (X) >

The polymerizable composition according to the present disclosure contains at least one kind of epoxy compound (X).

The epoxy compound (X) in the present disclosure is a compound which contains one or more epoxy groups within one molecule, and which does not contain an episulfide group.

The epoxy compound (X) preferably includes an epoxy compound (X1).

The epoxy compound (X1) as used herein is a compound which contains two or more (preferably from two to four, more preferably two or three, and still more preferably two) epoxy groups within one molecule.

The proportion of the epoxy compound (X1) in the total amount of the epoxy compound (X) is preferably from 50% by mass to 100% by mass, more preferably from 60% by mass to 100% by mass, and still more preferably from 80% by mass to 100% by mass.

Specific examples of the epoxy compound (X) include:
phenolic epoxy compounds, which are condensation products of aromatic hydroxy compounds such as phenol, cresol, xylenol, naphthol, hydroquinone, catechol, resorcinol, bisphenol A, bisphenol F, bisphenol sulfone, bisphenol ether, bisphenol sulfide, bisphenol sulfide, and halogenated bisphenol A novolac resins, with glycidol;
alcohol-based epoxy compounds, which are condensation products of alcohol compounds such as methanol, ethanol, propanol, butanol, pentanol, hexanol, heptanol, octanol, nonanol, iso-propyl alcohol, iso-butyl alcohol, tert-butanol, neopentyl alcohol, ethylene glycol, diethylene glycol, triethylene glycol, polyethylene glycol, propylene glycol, dipropylene glycol, polypropylene glycol, 1,3-propanediol, 1,4-butanediol, 1,6-hexandiol, neopentyl glycol, glycerin, trimethylolpropane trimethacrylate, pentaerythritol, 1,3-cyclohexanediol, 1,4-cyclohexanediol, 1,3-cyclohexanedimethanol, 1,4-cyclohexanedimethanol, hydrogenated bisphenol A, bisphenol A-ethylene oxide adducts, and bisphenol A-propylene oxide adducts, with glycidol;
glycidyl ester-based epoxy compounds, which are condensation products of carboxylic acid compounds such as formic acid, acetic acid, propionic acid, butyric acid, valeric acid, hexanoic acid, isobutyric acid, isovaleric acid, benzoic acid, benzoylacetic acid, naphthalene carboxylic acid, adipic acid, sebacic acid, dodecanedicarboxylic acid, dimer acid, phthalic acid, isophthalic acid, terephthalic acid, tetrahydrophthalic acid, methyltetrahydrophthalic acid, hexahydrophthalic acid, hexahydroisophthalic acid, hexahydroterephthalic acid, HET acid, nadic acid, maleic acid, succinic acid, fumaric acid, trimellitic acid, benzenetetracarboxylic acid, benzophenonetetracarboxylic acid, naphthalenedicarboxylic acid, and diphenyl dicarboxylic acid, with glycidol;
primary amines such as methylamine, ethylamine, propylamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, bis-(3-aminopropyl) ether, 1,2-bis-(3-amino propoxy)ethane, 1,3-bis-(3-amino propoxy)-2,2'-dimethylpropane, 1,2-, 1,3- or 1,4-bisaminocyclohexane, 1,3- or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, isophoronediamine, 1,4-bisaminopropylpiperazine, m- or p-phenylenediamine, 2,4- or 2,6-tolylenediamine, m- or p-xylylenediamine, 1,5- or 2,6-naphthalenediamine, 4,4'-diaminodiphenylmethane, 4,4'-diaminodiphenyl ether, and 2,2-(4,4'-diaminodiphenyl)propane;
amine-based epoxy compounds produced by the reaction of secondary amines such as dimethylamine, diethylamine, dibutylamine, methylethylamine, methylpropylamine, methylbutylamine, methylpentylamine, methylhexylamine, ethylpropylamine, ethylbutylamine, ethylpentylamine, ethylhexylamine, N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3 -diaminopropane, N,N' -diethyl-1,2-diaminobutane, N,N' -diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di-(4-piperidyl)-methane, 1,2-di-(4-piperidyl)-ethane, 1,3-di-(4-piperidyl)-propane, and 1,4-di-(4-piperidyl)-butane, with epihalohydrin;
alicyclic epoxy compounds such as cyclohexene oxide, 3,4-epoxycyclohexyl-3,4-epoxycyclohexane carboxylate, vinylcyclohexane dioxide, 1,2:8,9-diepoxylimonene, 2-(3,4-epoxycyclohexyl)-5,5-spiro-3,4-epoxycyclohexane-meth-dioxane, and bis(3,4-epoxycyclohexyl)adipate;
epoxy compounds produced by the epoxidation of unsaturated compounds such as styrene oxide, cyclopentadiene epoxide, epoxidized soybean oil, epoxidized polybutadiene, and vinylcyclohexene epoxide; and
urethane-based epoxy compounds produced from polyhydric alcohols or phenol compounds, with diisocyanate and glycidol.

The epoxy compound (X) (such as the epoxy compound (X1) described above; the same shall apply hereinafter) preferably contains an aromatic ring, more preferably contains an aromatic ring and a glycidyloxy group, and still more preferably contains an aromatic ring and two or more (preferably from two to four, more preferably two or three, and still more preferably two) glycidyloxy groups, from the viewpoint of further improving the heat resistance of the resulting resin.

The epoxy compound (X) preferably has a molecular weight of 1,000 or less, more preferably 500 or less, and still more preferably 400 or less, from the viewpoint of further improving the heat resistance of the resulting resin.

The lower limit of the molecular weight of the epoxy compound (X) is preferably 100, and more preferably 200.

The epoxy compound (X) preferably includes at least one selected from the group consisting of bisphenol A diglycidyl ether (hereinafter, also referred to as "BGPP") (molecular weight: 340) and resorcinol diglycidyl ether (molecular weight: 222).

In this case, the proportion of the total amount of bisphenol A diglycidyl ether and resorcinol diglycidyl ether, in the total amount of the epoxy compound (X), is preferably from 50% by mass to 100% by mass, more preferably from 60% by mass to 100% by mass, and still more preferably from 80% by mass to 100% by mass.

The content of the epoxy compound (X) with respect to the total amount of the polymerizable composition according to the present disclosure is preferably 0.05% by mass or more, more preferably 0.10% by mass or more, and still more preferably 0.20% by mass or more, from the viewpoint of further improving the color of the resulting resin.

The content of the epoxy compound (X) with respect to the total amount of the polymerizable composition according to the present disclosure is preferably 20% by mass or less, more preferably 10% by mass or less, and still more preferably 3% by mass or less, because the resulting resin has a better strength.

The content of the epoxy compound (X) with respect to the total amount of the polymerizable composition according to the present disclosure may preferably be, for example, within a range of from 0.05% by mass to 20% by mass.

### < Ratio (Ms - MN)/M_{E} >

In the polymerizable composition according to the present disclosure, the ratio (Ms - M_{N})/M_{E} is preferably more than 0 but equal to or less than 0.20, and more preferably more than 0 but equal to or less than 0.15, when:
the total number of moles of mercapto groups contained in the total amount of the polythiol compound is defined as Ms;
the total number of moles of iso(thio)cyanate groups contained in the total amount of the polyiso(thio)cyanate compound is defined as M_{N}; and
the total number of moles of episulfide groups contained in the total amount of the episulfide compound represented by Formula (1) is defined as M_{E}.

When the ratio (Ms - M_{N})/M_{E} is more than 0, the strength of the resulting resin is further improved.

When the ratio (Ms - M_{N})/M_{E} is 0.20 or less, the heat resistance of the resulting resin is further improved.

### < Compound Represented by Formula (2) >

The polymerizable composition according to the present disclosure preferably contains a compound represented by the following Formula (2).

The compound represented by the following Formula (2) is capable of functioning as a curing catalyst.

In a case in which the polymerizable composition according to the present disclosure contains a compound represented by the following Formula (2), the strength of the resulting resin can further be improved.

In a case in which the polymerizable composition according to the present disclosure contains a compound represented by the following Formula (2), the composition may contain only one kind or two or more kinds of compounds represented by Formula (2).

(R¹)₄Y⁺X⁻ (2)

In Formula (2), each of four R¹s independently represents a linear hydrocarbon group having from 1 to 10 carbon atoms or a branched hydrocarbon group having from 3 to 10 carbon atoms; X represents a halogen atom; and Y represents a nitrogen atom or a phosphorus atom.

In Formula (2), the "linear hydrocarbon group having from 1 to 10 carbon atoms" or the "branched hydrocarbon group having from 3 to 10 carbon atoms", represented by R¹, is preferably a linear alkyl group having from 1 to 10 carbon atoms or a branched alkyl group having from 3 to 10 carbon atoms.

From the viewpoint of further improving the appearance of the resulting resin, the "linear hydrocarbon group having from 1 to 10 carbon atoms" or the "branched hydrocarbon group having from 3 to 10 carbon atoms", represented by R¹, is more preferably a linear alkyl group having from 1 to 6 carbon atoms or a branched alkyl group having from 3 to 6 carbon atoms, and still more preferably a linear alkyl group having from 1 to 6 carbon atoms.

In Formula (2), the halogen atom represented by X is preferably a fluorine atom, a chlorine atom, a bromine atom, or an iodine atom, more preferably a fluorine atom, a chlorine atom, or a bromine atom, and still more preferably a chlorine atom or a bromine atom.

From the viewpoint of further improving the appearance of the resulting resin, the halogen atom represented by X is particularly preferably a bromine atom.

In Formula (2), Y may be a nitrogen atom or a phosphorus atom, but is preferably a nitrogen atom.

The compound represented by Formula (2) is preferably tetra-n-butylammonium bromide (TBAB) or tri-n-octylmethylammonium chloride (TOMAC).

Tetra-n-butylammonium bromide (TBAB) is a compound in which each of four R¹s is an n-butyl group, Y is a nitrogen atom, and X is a bromine atom, in Formula (2).

The content of the compound represented by Formula (2) in the polymerizable composition is preferably from 0.01% by mass to 1% by mass, more preferably from 0.01 to 0.5% by mass, and still more preferably from 0.01 to 0.3% by mass, with respect to the total amount of the episulfide compound represented by Formula (1), the polyiso(thio)cyanate compound and the polythiol compound.

### < Tertiary Amine Compound >

The polymerizable composition according to the present disclosure preferably contains a tertiary amine compound.

The tertiary amine compound is capable of functioning as a curing catalyst.

In a case in which the polymerizable composition according to the present disclosure contains a tertiary amine compound, the appearance of the resulting resin can further be improved.

In a case in which the polymerizable composition according to the present disclosure contains a tertiary amine compound, the composition may contain only one kind or two or more kinds of tertiary amine compounds.

The polymerizable composition according to the present disclosure may contain both a compound represented by Formula (2) and a tertiary amine compound (for example, at least one of a compound represented by Formula (3) or a compound represented by Formula (4)).

The tertiary amine compound preferably includes at least one of a compound represented by the following Formula (3) or a compound represented by the following Formula (4).

### (Compound Represented by Formula (3))

In a case in which the polymerizable composition according to the present disclosure contains a compound represented by the following Formula (3), the composition may contain only one kind or two or more kinds of compounds represented by Formula (3).

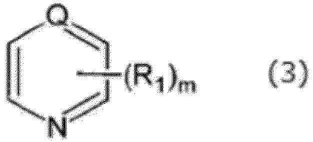

In Formula (3), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom, a nitrogen atom, or an oxygen atom; and m represents an integer from 0 to 5.

In Formula (3), m is preferably an integer from 0 to 3, and more preferably an integer from 1 to 3.

Examples of the linear alkyl group having from 1 to 20 carbon atoms, represented by R₁ in Formula (3), include methyl group, ethyl group, n-propyl group, n-butyl group, pentyl group, hexyl group, heptyl group, n-octyl group, nonyl group, decyl group, and dodecyl group.

Examples of the branched alkyl group having from 3 to 20 carbon atoms, represented by R₁ in Formula (3), include isopropyl group, isobutyl group, t-butyl group, isopentyl group, isooctyl group, 2-ethylhexyl group, 2-propylpentyl group, and isodecyl group.

Examples of the cycloalkyl group having from 3 to 20 carbon atoms, represented by R₁ in Formula (3), include cyclopropyl group, cyclobutyl group, cyclopentyl group, cyclohexyl group, cycloheptyl group, and cyclooctyl group.

R₁ in Formula (3) is preferably a linear alkyl group having from 1 to 20 carbon atoms or a halogen atom, and more preferably a linear alkyl group having from 1 to 3 carbon atoms or a chlorine atom.

The compound represented by Formula (3) is preferably at least one selected from the group consisting of 2-methylpyrazine, pyridine, α-picoline, β-picoline, γ-picoline, 2,6-lutidine, 3,5-lutidine, 2,4,6-trimethylpyridine, 3-chloropyridine, 2-ethylpyridine, and 3-ethylpyridine.

### (Compound Represented by Formula (4))

In a case in which the polymerizable composition according to the present disclosure contains a compound represented by the following Formula (4), the composition may contain only one kind or two or more kinds of compounds represented by Formula (4).

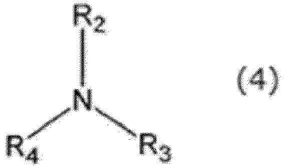

In Formula (4), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group; and R₂ and R₃ may be bonded to each other to form a ring.

In Formula (4), each of R₂, R₃, and R₄ preferably independently represents a linear alkyl group having from 3 to 20 carbon atoms, more preferably a linear alkyl group having from 3 to 10 carbon atoms, and particularly preferably a linear alkyl group having from 5 to 10 carbon atoms.

Examples of the linear alkyl group having from 3 to 20 carbon atoms, represented by R₂, R₃, or R₄ include n-propyl group, n-butyl group, pentyl group, hexyl group, heptyl group, n-octyl group, nonyl group, decyl group, and dodecyl group.

R₂ and R₃ may be bonded to each other to form a ring.

In other words, the compound represented by Formula (4) may be a cyclic amine compound having a structure in which R₂ and R₃ are bonded to each other to form a ring.

Examples of the cyclic amine compound include 1-propylpiperidine, 1-butylpiperidine, 1-cyclohexylpiperidine, 1-butylpyrrolidine, and 1-cyclohexylpyrrolidine.

The compound represented by Formula (4) is preferably at least one selected from the group consisting of triallylamine and trioctylamine.

The content of the tertiary amine compound (for example, the total content of the compound represented by Formula (3) and the compound represented by Formula (4)) in the polymerizable composition is preferably from 0.01% by mass to 1% by mass, more preferably from 0.01 to 0.5% by mass, and still more preferably from 0.01 to 0.5% by mass, with respect to the total amount of the episulfide compound represented by Formula (1), the polyiso(thio)cyanate compound and the polythiol compound.

The total content of the compound represented by Formula (2) and the tertiary amine compound (for example, the total content of the compounds represented by Formulae (2) to (4)) in the polymerizable composition is preferably from 0.01% by mass to 1% by mass, more preferably from 0.01 to 0.5% by mass, and still more preferably from 0.01 to 0.5% by mass, with respect to the total amount of the episulfide compound represented by Formula (1), the polyiso(thio)cyanate compound and the polythiol compound.

The polymerizable composition according to the present disclosure may contain, as a curing catalyst, another compound other than the compounds represented by Formula (2) to Formula (4).

The curing catalyst can be selected, for example, from the curing catalysts described in paragraphs 0029 to 0033 of JP-A No. 2002-194083, and the like.

### < Lewis Acid Compound >

The polymerizable composition according to the present disclosure preferably contains a Lewis acid compound.

By this, the pot life of the polymerizable composition can further be improved.

In a case in which the polymerizable composition according to the present disclosure contains a Lewis acid compound, the composition may contain only one kind or two or more kinds of Lewis acid compounds.

Examples of the Lewis acid compound include, but not particularly limited to, organic tin compounds, zinc chloride, acetylacetone zinc, aluminum chloride, aluminum fluoride, triphenylaluminum, tetrachlorotitanium, and calcium acetate.

For example, the descriptions in known literature, such as JP-ANo. 2000-256435 (paragraphs 0059 to 0060, in particular), JP-ANo. 2005-272778 (paragraph 0058, in particular), and JP-A No. 2001-131257 (paragraph 0027, in particular), may be referred to as appropriate, regarding the Lewis acid compound.

Examples of the organic tin compound include, but not particularly limited to: dialkyltin halides such as dibutyltin dichloride and dimethyltin dichloride; dialkyltin dicarboxylates such as dimethyltin diacetate, dibutyltin dioctanoate, and dibutyltin dilaurate; tetrachlorotin; and dibutyltin oxide.

The definition of the dialkyltin halides may include monoalkyltin halides and trialkyltin halides.

The definition of the dialkyltin dicarboxylates may include monoalkyltin tricarboxylates and trialkyltin carboxylates.

From the viewpoint of further improving the pot life of the polymerizable composition, the Lewis acid compound preferably includes a compound represented by the following Formula (5), which is a specific organic tin compound.

(R₄)_{c}-Sn-X_{4-c} (5)

In Formula (5), R₄ represents an alkyl group having from 1 to 4 carbon atoms; X represents a fluorine atom, a chlorine atom, a bromine atom, or -O-C(=O)-Rs wherein R₅ represents an alkyl group having from 1 to 11 carbon atoms; and c represents an integer from 1 to 3.

The compound represented by Formula (5) is preferably at least one selected from the group consisting of dimethyltin dichloride, dibutyltin dichloride, and dibutyltin dilaurate.

The content of the Lewis acid compound (for example, an organic tin compound such as a compound represented by Formula (5)) is preferably from 100 ppm by mass to 500 ppm by mass, and more preferably from 200 ppm by mass to 400 ppm by mass, with respect to the total amount of the polymerizable composition.

### < Other Components >

The polymerizable composition according to the present disclosure may contain any other components other than the components described above.

Examples of the other components include bluing agents, mercapto organic acids, resins (such as acrylic resins and olefin resins), crosslinking agents, photostabilizers, ultraviolet absorbers, antioxidants, stain inhibitors, dyes, fillers, and internal release agents.

Known components can be used as the other components.

For example, JP-ANo. 2002-194083 can be referred to as appropriate, regarding the other components.

The polymerizable composition according to the present disclosure can be obtained by mixing the respective components (raw materials) described above.

The respective components (raw materials) can be mixed in any order without particular limitation. All of the raw materials may be introduced into a container at once and mixed, or alternatively, the raw materials may be introduced into a container in divided amounts over multiple times and mixed.

Further, some of the monomers in the polymerizable composition according to the present disclosure may be polymerized to form a prepolymer, at a stage in the middle of the mixing.

The monomers in the polymerizable composition according to the present disclosure refer to at least the episulfide compound represented by Formula (1), the polyiso(thio)cyanate compound, and the polythiol compound. In addition to these compounds, the epoxy compound (X) may also function as a monomer.

### [Resin and Formed body]

A resin according to the present disclosure is a cured product of the above-described polymerizable composition according to the present disclosure.

A formed body according to the present disclosure includes the resin according to the present disclosure.

In other words, the resin according to the present disclosure can be obtained by curing the above-described polymerizable composition according to the present disclosure, specifically, by polymerizing the monomers in the polymerizable composition according to the present disclosure, to cure the composition.

The monomers in the polymerizable composition according to the present disclosure can be polymerized, for example, by a method such as casting polymerization. The casting polymerization enables to obtain the formed body according to the present disclosure which includes the resin according to the present disclosure (namely, a cured product of the polymerizable composition according to the present disclosure).

In the casting polymerization, first, the polymerizable composition according to one example of the present disclosure is injected between a pair of molding molds fixed with a gasket, a tape, or the like. At this time, a defoaming treatment, a filtration treatment or the like may be performed, if necessary.

Next, the monomers in the composition which has been injected between the molding molds are polymerized to cure the composition between the molding molds, to obtain a cured product. Subsequently, the cured product is removed from the molding molds, to obtain a cured product.

The polymerization of the above-described monomers may be performed by heating the polymerizable composition according to the present disclosure. The heating can be carried out, for example, using a heating apparatus provided with a mechanism for heating an object to be heated in an oven, water, or the like.

Polymerization conditions (such as polymerization temperature, polymerization time, and the like) for polymerizing the monomers in the polymerizable composition according to the present disclosure can be set as appropriate, taking into consideration the composition of the polymerizable composition, the types and the amounts to be used of the monomers in the polymerizable composition, the type(s) and the amount(s) to be used of the polymerization catalyst(s) in the polymerizable composition, the shape of the molds, and the like.

The polymerization temperature may be, for example, from -50°C to 150°C, from 10°C to 150°C, or the like.

The polymerization time may be, for example, from 1 hour to 200 hours, from 1 hour to 80 hours, or the like.

The resin according to the present disclosure or the formed body including the resin may be one obtained by performing a treatment such as annealing, after the polymerization of the monomers.

The annealing may be carried out, for example, at a temperature of from 50°C to 150°C, from 90°C to 140°C, from 100°C to 130°C, or the like.

### [Optical Material]

An optical material according to the present disclosure includes the above-described resin according to the present disclosure.

The optical material according to the present disclosure can be produced, for example, by the casting polymerization described above.

The optical material according to the present disclosure may be one composed of the resin according to the present disclosure, or may be one including the resin according to the present disclosure and any other elements.

The other element(s) may be, for example, another member(s), a coating layer(s) provided to the resin according to the present disclosure, and/or the like.

The optical material according to the present disclosure may be, for example, a lens (such as an eyeglass lens, a camera lens, or a polarized lens), a light emitting diode (LED), or the like.

### [Lens]

A lens according to the present disclosure is one example of the optical material according to the present disclosure, and includes the above-described resin according to the present disclosure.

The lens according to the present disclosure can be produced, for example, by the casting polymerization described above.

The lens according to the present disclosure may be one composed of the resin according to the present disclosure, or may be one including the resin according to the present disclosure and any other elements.

The other element(s) may be, for example, another member(s), a coating layer(s) provided to the resin according to the present disclosure, and/or the like.

The lens according to the present disclosure may be, for example, an eyeglass lens, a camera lens, or a polarized lens.

A description will be given below of an eyeglass lens, as one example of the lens according to the present disclosure.

The eyeglass lens includes the resin according to the present disclosure which has been shaped in the form of a desired lens.

The eyeglass lens preferably further includes a coating layer provided on one surface or both surfaces of the resin.

Specifically, the coating layer may be, for example, a primer layer, a hard coat layer, an anti-reflection layer, an anti-fog coating layer, an anti-fouling layer, or a water-repellent layer. Each of these coating layers can be used singly, or a plurality of such coating layers can be used in a multilayer form.

In a case in which both surfaces of the cured product are provided with coating layers, the respective surfaces may each be provided with the same coating layer, or with a different coating layer.

The components of the coating layer can be selected as appropriate, depending on the purpose of the layer.

Examples of the components of the coating layer include resins (such as urethane resins, epoxy resins, polyester resins, melamine resins, and polyvinyl acetal resins), infrared absorbers, photostabilizers, antioxidants, photochromic compounds, dyes, pigments, and antistatic agents.

For example, the description in known literature, such as JP-ANo. 2002-194083 and WO 2017/047745, can be referred to as appropriate, regarding the eyeglass lens and the coating layer.

### EXAMPLES

Examples of the present disclosure will be shown below. However, the present disclosure is in no way limited to the following Examples. In Examples below, the "part(s)" is based on mass, unless otherwise specified.

### [Example 1]

### < Preparation of Polymerizable Composition >

A quantity of 26.5 parts by mass of a mixture (hereinafter, also referred to as "PI-1") of 2,5-bis(isocyanatomethyl)bicyclo[2.2.1]heptane and 2,6-bis(isocyanatomethyl)bicyclo[2.2.1]heptane, as the polyiso(thio)cyanate compound;
0.68 parts by mass of bisphenol A diglycidyl ether (hereinafter, also referred to as "B GPP") as the epoxy compound (X);
0.067 parts by mass of tetrabutylammonium bromide (hereinafter, also referred to as "TBAB") as a curing catalyst which is the compound represented by Formula (2);
0.050 parts by mass of "ZELEC UN" (brand name; an acidic phosphate ester-based release agent manufactured by Stepan Company), as a release agent; and
0.088 parts by mass of "Tinuvin PS" (manufactured by BASF Japan Ltd.), as an ultraviolet absorber;
were mixed and dissolved at 20°C.

To the resulting solution,
45.4 parts by mass of bis(2,3-epithiopropyl)disulfide (hereinafter, also referred to as "EPS-1"), as the episulfide compound represented by Formula (1); and
28.1 parts by mass a polythiol composition (hereinafter, also referred to as "PT-1") which contains 4,8-dimercaptomethyl-1,11-dimercapto-3,6,9-trithiaundecane, 4,7-dimercaptomethyl-1,11-dimercapto-3,6,9-trithiaundecane and 5,7-dimercaptomethyl-1,11-dimercapto-3,6,9-trithiaundecane, as main components;
were introduced in the order mentioned, and mixed, to obtain a polymerizable composition.

The types and the amounts of the respective components contained in the polymerizable composition are shown in Table 1.

In Table 1, the symbol "-" indicates that the polymerizable composition does not contain the corresponding component.

The ratio (Ms - M_{N})/M_{E} in the polymerizable composition is also shown in Table 1.

The ratio (Ms - M_{N})/M_{E} as used herein is the ratio (Ms - M_{N})/M_{E} (which is roughly the ratio of excessive thiol groups (Ms- MN) to episulfide groups (M_{E})), when: the total number of moles of mercapto groups contained in the total amount of the polythiol compound is defined as Ms; the total number of moles of iso(thio)cyanate groups contained in the total amount of the polyiso(thio)cyanate compound is defined as M_{N}; and the total number of moles of episulfide groups contained in the total amount of the episulfide compound represented by Formula (1) is defined as M_{E}.

### < Preparation of Resin Formed body >

The polymerizable composition obtained as described above was filtered with a 3 µm TEFLON (registered trademark) filter, and then sufficiently degassed under a reduced pressure of 600 Pa until foaming was no longer observed.

The degassed polymerizable composition was injected between a pair of glass molds fixed with a tape. Then the pair of glass molds between which the polymerizable composition had been injected was placed in an oven, and the temperature in the oven was gradually raised from 30°C to 120°C over 15 hours. By the procedure described above, the monomers (namely, the episulfide compound represented by Formula (1), the polyiso(thio)cyanate compound, the polythiol composition, and the like) in the degassed polymerizable composition were polymerized, to form a resin formed body (namely, a formed body of a resin which is a cured product of the polymerizable composition) between the pair of glass molds.

Subsequently, the interior of the oven was cooled, the pair of glass molds was taken out of the oven after cooling, and then the resulting resin formed body was removed from the pair of glass molds, to obtain the resin formed body. The thus obtained resin formed body was subjected to annealing at 120°C for one hour, to obtain a lens including the resin.

### < Evaluations >

The following evaluations were carried out for the polymerizable composition or the resin formed body.

The results are shown in Table 1.

### · Optical Properties (Refractive Index (nₑ) and Abbe Number (vₑ))

Using a Pulfrich refractometer KPR-30, manufactured by Shimadzu Corporation, each of the refractive indices at a wavelength of 546.1 nm (mercury e line), a wavelength of 480.0 nm (Cd F' line) and a wavelength of 643.9 nm (Cd C' line) was measured, and the refractive index (nₑ) and the Abbe number (vₑ) were each obtained based on these measured results.

### -Heat Resistance

A test piece having a length of 10 mm, a width of 10 mm, and a thickness of 2.5 mm was obtained by the same procedure as in the section of < Preparation of Resin Formed body > described above, except that the shape and the size of the pair of glass molds were selected as appropriate.

Using a thermomechanical analyzer TMA-60, manufactured by Shimadzu Corporation, the glass transition temperature Tg of the above-described sample was measured by a TMA penetration method (load: 50 g, pin tip diameter: 0.5 mm, temperature rise rate: 10°C/min), and the measured value was used as an index of heat resistance.

A higher glass transition temperature Tg indicates a better heat resistance.

### · Flexural Strength (Flexural Modulus))

A rectangular plate-like test piece having a length of 65 mm, a width of 25 mm, and a thickness of 2.5 mm was obtained by the same procedure as in the section of < Preparation of Resin Formed body > described above, except that the shape and the size of the pair of glass molds were selected as appropriate.

The resulting test piece was subjected to a three-point flexural test using AUTOGRAPH AGS-J, manufactured by Shimadzu Corporation, and the flexural modulus of the sample was determined based on the range in which a force of from 20 N to 30 N was applied to the sample.

### · Perforated Tensile Strength

A disk-like formed body in which S = -2.00 D and which has a diameter of 45 mm was obtained by the same procedure as in the section of < Preparation of Resin Formed body > described above, except that the shape and the size of the pair of glass molds were selected as appropriate.

Two holes each having a diameter of 1.6 mm were perforated in the resulting disk-like formed body, at two locations 5 mm away from both ends toward the center thereof, and the perforated formed body was used as a test piece. Pins were inserted through the holes at the two locations, the measurement was carried out with 0.5% permanent strain as the proof stress point, using AUTOGRAPH AGS-J manufactured by Shimadzu Corporation, and the measured value was used as an index of perforated tensile strength.

### · YI (Yellow Index; Degree of Yellowing), a*, and b*

A disk-like test piece having a thickness of 2.5 mm and a diameter of 75 mm was obtained by the same procedure as in the section of < Preparation of Resin Formed body > described above, except that the shape and the size of the pair of glass molds were selected as appropriate. The YI (yellow index; degree of yellowing), a* and b* of the resulting test piece were determined, using a spectrocolorimeter CM-5, manufactured by Konica Minolta, Inc.

A lower numerical value of the YI indicates that the test piece has a better color as a lens.

### · Appearance

The test piece (resin formed body) used for the measurements of the above-described YI and the like was visually observed, and the appearance of the test piece was evaluated in accordance with the following evaluation criteria.

### - Evaluation Criteria for Appearance -

A: No pattern was visually observed at all, and the test piece had a favorable appearance.
B: A striped or spotted pattern was visible when observed at close range, but no pattern was visible when observed from a position 50 cm away, and the appearance of the test piece was practically within a permissible range.
C: A pattern was visible when observed from a position 50 cm away, and the appearance of the test piece was practically outside the permissible range.

### [Example 2]

The same procedure as in Example 1 was repeated except that the components of the polymerizable composition were changed as shown in Table 1.

The results are shown in Table 1.

In Table 1, "PT-2" represents 4-mercaptomethyl-1,8-dimercapto-3,6-dithiaoctane.

### [Example 3]

The same procedure as in Example 1 was repeated except for the points described below.

The results are shown in Table 1.

### - Changes from Example 1 -

· The components of the polymerizable composition were changed as shown in Table 1.

In Table 1, "PI-2" represents xylylene diisocyanate, and "TOMAC" represents tri-n-octylmethylammonium chloride.
· All the components were mixed, and then the resulting mixture was further stirred at 20°C for one hour, to obtain a polymerizable composition.
· The filtration operation in the section < Preparation of Resin Formed body > was omitted.

### [Example 4]

The same procedure as in Example 3 was repeated except that the type and the amount of the curing catalyst were changed as shown in Table 1.

The results are shown in Table 1.

### - Changes from Example 1 -

· The components of the polymerizable composition were changed as shown in Table 1.
· 3,5-lutidine was dissolved in a polythiol composition which contains 4,8-dimercaptomethyl-1,11 -dimercapto-3,6,9-trithiaundecane, 4,7-dimercaptomethyl-1,11-dimercapto-3,6,9-trithiaundecane and 5,7-dimercaptomethyl-1,11-dimercapto-3,6,9-trithiaundecane, as main components, and used.

### [Comparative Example 1]

A polymerizable composition and a resin formed body shown below were prepared, and the same evaluations as in Example 1 were carried out for the resulting polymerizable composition and resin formed body.

The results are shown in Table 1.

### < Preparation of Polymerizable Composition >

To 90.9 parts by mass of bis(2,3-epithiopropyl)disulfide (EPS-1) as the episulfide compound represented by Formula (1),
1 part by mass of "Tinuvin PS" (manufactured by BASF Japan Ltd.) as an ultraviolet absorber,
8.2 parts by mass of a polythiol composition (PT-1) which contains 4,8-dimercaptomethyl-1,11-dimercapto-3,6,9-trithiaundecane, 4,7-dimercaptomethyl-1,11-dimercapto-3,6,9-trithiaundecane and 5,7-dimercaptomethyl-1,11-dimercapto-3,6,9-trithiaundecane, as main components; and
0.091 parts by mass of N,N-dicyclohexylmethylamine (hereinafter, also referred to as "DCH") as a curing catalyst;
were mixed and dissolved at 20°C in the order mentioned.

To the resulting solution, a mixture of
0.018 parts by mass of N,N-dimethylcyclohexylamine (hereinafter, also referred to as "DCA") as a curing catalyst; and
0.9 parts by mass of the polythiol composition (PT-1) which contains 4,8-dimercaptomethyl-1,11-dimercapto-3,6,9-trithiaundecane, 4,7-dimercaptomethyl-1,11-dimercapto-3,6,9-trithiaundecane and 5,7-dimercaptomethyl-1,11-dimercapto-3,6,9-trithiaundecane, as main components;
was introduced, followed by mixing at 20°C, to obtain a polymerizable composition.

### < Preparation of Resin Formed body >

The polymerizable composition obtained as described above was filtered with a 1 µm TEFLON (registered trademark) filter, and then sufficiently degassed under a reduced pressure of 600 Pa until foaming was no longer observed.

The degassed polymerizable composition was injected between a pair of glass molds fixed with a tape. Then the pair of glass molds between which the polymerizable composition had been injected was placed in an oven, and the temperature in the oven was gradually raised from 30°C to 80 over 21 hours. By the procedure described above, the monomers (namely, the episulfide compound represented by Formula (1), the polythiol composition and the like) in the degassed polymerizable composition were polymerized, to form a resin formed body (namely, a formed body of a resin which is a cured product of the polymerizable composition) between the pair of glass molds.

Subsequently, the interior of the oven was cooled, the pair of glass molds was taken out of the oven after cooling, and then the resulting resin formed body was removed from the pair of glass molds, to obtain the resin formed body. The thus obtained resin formed body was subjected to annealing at 120°C for 3 hours, to obtain a lens including the resin.

**[Table 1]**

| | | | Example 1 | Example 2 | Example 3 | Example 4 | Comparative Example 1 |
|---|---|---|---|---|---|---|---|
| Polymerizable composition | Episulfide compound represented by Formula (1) | Type | EPS-1 | EPS-1 | EPS-1 | EPS-1 | EPS-1 |
| | | Amount (part(s) by mass) | 45.4 | 63.6 | 45.5 | 45.5 | 90.9 |
| | Polyiso(thio)cyanate compound | Type | PI-1 | PI-1 | PI-2 | PI-2 | - |
| | | Amount (part(s) by mass) | 26.5 | 16.3 | 25.4 | 25.4 | |
| | Polythiol composition | Type | PT-1 | PT-2 | PT-1 | PT-1 | PT-1 |
| | | Amount (part(s) by mass) | 28.1 | 20.1 | 29.2 | 29.2 | 9.1 |
| | Epoxy compound (X) | Type | BGPP | BGPP | BGPP | BGPP | - |
| | | Amount (part(s) by mass) | 0.68 | 0.95 | 0.75 | 0.75 | |
| | Curing catalyst which is compound represented by Formula (2) | Type | TBAB | TBAB | TOMAC | - | - |
| | | Amount (part(s) by mass) | 0.067 | 0.095 | 0.1 | | |
| | Curing catalyst | Type | - | - | - | 3,5-lutidine | - |
| | which is compound represented by Formula (3) or (4) | Amount (part(s) by mass) | | | | 0.03 | |
| | Other curing catalysts | Type | - | - | - | - | DCH |
| | | Amount (part(s) by mass) | | | | | 0.091 |
| | | Type | - | - | - | - | DCA |
| | | Amount (part(s) by mass) | | | | | 0.018 |
| | Ultraviolet absorber | Type | Tinuvin PS | Tinuvin PS | Tinuvin PS | Tinuvin PS | Tinuvin PS |
| | | Amount (part(s) by mass) | 0.088 | 0.088 | 0.088 | 0.088 | 1 |
| | Release agent | Type | ZELEC UN | ZELEC UN | ZELEC UN | ZELEC UN | - |
| | | Amount (part(s) by mass) | 0.050 | 0.032 | 0.050 | 0.050 | |
| | Ratio (M_{S} - M_{N})/M_{E} | | 0.11 | 0.12 | 0.11 | 0.11 | 0.11 |
| Evaluation Results | Optical properties | Refractive index (nₑ) | 1.677 | 1.698 | 1.700 | 1.701 | 1.738 |
| | | Abbe number (vₑ) | 35.3 | 34.4 | 32.5 | 32.0 | 32.3 |
| | Heat resistance | Tg [°C] | 102.2 | 88.1 | 85.0 | 91.6 | 84.0 |
| | Perforated Tensile Test | Maximum test force [kgf] | 58.5 | 50.5 | 58.1 | 60.1 | 28.2 |
| | | Displacement at fracture [mm] | 1.37 | 1.17 | 1.38 | 1.31 | 0.54 |
| | | Proof stress point [kgf] | 52.7 | 45.8 | 50.7 | 54.0 | None |
| | Three-point bending test | Maximum stress [N/mm²] | 152.6 | 136.6 | 159.6 | 159.8 | 133.7 |
| | | Flexural modulus [N/mm²] | 3338 | 3235 | 3928 | 3698 | 3649 |
| | Spectrocolorimeter | YI | 7.26 | 3.94 | 6.97 | 5.99 | 3.30 |
| | | a* | -2.25 | -1.11 | -1.96 | -1.42 | -1.00 |
| | | b* | 4.71 | 2.48 | 4.42 | 3.68 | 2.10 |
| | Appearance | | B | A | B | A | A |

As shown in Table 1, it was possible to produce a resin formed body having a high refractive index and an excellent strength (strength in a perforated tensile test, in particular), according to each of the polymerizable compositions of Examples 1 to 4 which contains: an episulfide compound represented by Formula (1); a polyiso(thio)cyanate compound; a polythiol compound; and an epoxy compound (X) which contains one or more epoxy groups within one molecule, and which does not contain an episulfide group.

In contrast, the resin formed body obtained from the resin composition of Comparative Example 1 showed a poor strength (strength in a perforated tensile test, in particular) despite having a high refractive index.

### [Example 101]

### < Preparation of Polymerizable Composition >

A quantity of 25.4 parts by mass of PI-2 (namely, xylylene diisocyanate) as the polyiso(thio)cyanate compound;
1.00 parts by mass of BGPP (namely, bisphenol A diglycidyl ether) as the epoxy compound (X);
0.04 parts by mass of a Lewis acid compound (specifically, dimethyltin dichloride (hereinafter, also referred to as "DMC") as the compound represented by Formula (5));
0.03 parts by mass of "ZELEC UN" (brand name; an acidic phosphate ester-based release agent manufactured by Stepan Company) as a release agent; and
0.088 parts by mass of "Tinuvin PS" (manufactured by BASF Japan Ltd.) as an ultraviolet absorber;
were mixed and dissolved at 20°C.

To the resulting solution,
42.6 parts by mass of EPS-1 (namely, bis(2,3-epithiopropyl)disulfide) as the episulfide compound represented by Formula (1) was introduced, and then
a mixture of 32.0 parts by mass of PT-1 (namely, a polythiol composition which contains 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane, as main components), and 0.03 parts by mass of 3,5-lutidine as a curing catalyst which is the compound represented by Formula (3), was introduced, followed by mixing at a temperature of from 5 to 10°C, to obtain a polymerizable composition.

### < Preparation of Resin Formed body >

The polymerizable composition obtained as described above was sufficiently degassed under a reduced pressure of 600 Pa until foaming was no longer observed.

The degassed polymerizable composition was injected between a pair of glass molds fixed with a tape. Then the pair of glass molds between which the polymerizable composition had been injected was placed in an oven, and the temperature in the oven was gradually raised from 20°C to 120°C over 23 hours. By the procedure described above, the monomers (namely, the episulfide compound represented by Formula (1), the polyiso(thio)cyanate compound, the polythiol composition, and the like) in the degassed polymerizable composition were polymerized, to form a resin formed body (namely, a formed body of a resin which is a cured product of the polymerizable composition) between the pair of glass molds.

Subsequently, the interior of the oven was cooled, the pair of glass molds was taken out of the oven after cooling, and then the resulting resin formed body was removed from the pair of glass molds, to obtain the resin formed body. The resulting resin formed body was subjected to annealing at 120°C for one hour, to obtain a lens including the resin.

### < Evaluations >

The following evaluations were carried out for the polymerizable composition or the resin formed body.

The results are shown in Table 2.

### Viscosity of Polymerizable Composition

The polymerizable composition obtained as described above was stirred at 10°C for one hour, and the viscosity of the composition was measured with a Type B viscometer (spindle No. 62) manufactured by Brookfield Company.

A lower numerical value of the viscosity indicates the fact that the composition has a longer pot life.

### · Heat resistance and YI (Yellow Index; Degree of Yellowing)

Each of the heat resistance and the YI (yellow index; degree of yellowing) of the resin formed body was evaluated in the same manner as in Example 1.

### [Examples 102 to 106]

The same procedure as in Example 101 was repeated except that the components of the polymerizable composition were changed as shown in Table 2.

The results are shown in Table 2.

In Table 2, "DBC" represents dibutyltin dichloride as the Lewis acid compound (specifically, the compound represented by Formula (5)).

Further, in Table 2, the symbol "-" in the row of "Lewis acid compound (compound represented by Formula (5))" and the column of Example 106 indicates that no Lewis acid compound was used.

**[Table 2]**

| | | | Example 101 | Example 102 | Example 103 | Example 104 | Example 105 | Example 106 |
|---|---|---|---|---|---|---|---|---|
| Polymerizable composition | Episulfide compound | Type | EPS-1 | EPS-1 | EPS-1 | EPS-1 | EPS-1 | EPS-1 |
| | | Amount (part(s) by mass) | 42.6 | 42.6 | 42.6 | 42.6 | 42.6 | 42.6 |
| | Polyiso(thio)cyanate compound | Type | PI-2 | PI-2 | PI-2 | PI-2 | PI-2 | PI-2 |
| | | Amount (part(s) by mass) | 25.4 | 25.4 | 25.4 | 25.4 | 25.4 | 25.4 |
| | Polythiol composition | Type | PT-1 | PT-1 | PT-1 | PT-1 | PT-1 | PT-1 |
| | | Amount (part(s) by mass) | 32.0 | 32.0 | 32.0 | 32.0 | 32.0 | 32.0 |
| | Epoxy compound (X) | Type | BGPP | BGPP | BGPP | BGPP | BGPP | BGPP |
| | | Amount (part(s) by mass) | 1.0 | 1.0 | 1.0 | 1.5 | 1.5 | 1.0 |
| | Tertiary amine compound (compound represented by Formula (3)) | Type | 3,5-lutidine | 3,5-lutidine | 3,5-lutidine | 3,5-lutidine | 3,5-lutidine | 3,5-lutidine |
| | | Amount (part(s) by mass) | 0.03 | 0.03 | 0.045 | 0.03 | 0.03 | 0.03 |
| | Lewis acid compound (compound represented by Formula (5)) | Type | DMC | DBC | DBC | DBC | DBC | - |
| | | Amount (part(s) by mass) | 0.04 | 0.04 | 0.06 | 0.04 | 0.04 | |
| | Ultraviolet absorber | Type | Tinuvin PS | Tinuvin PS | Tinuvin PS | Tinuvin PS | Tinuvin PS | Tinuvin PS |
| | | Amount (part(s) by mass) | 0.088 | 0.088 | 0.088 | 0.088 | 1.000 | 0.088 |
| | Release agent | Type | ZELEC UN | ZELEC UN | ZELEC UN | ZELEC UN | ZELEC UN | ZELEC UN |
| | | Amount (part(s) by mass) | 0.03 | 0.03 | 0.03 | 0.03 | 0.03 | 0.03 |
| Evaluation Results | Viscosity of polymerizable composition | Viscosity (10°C, 60 min) mPa·s | 61.4 | 61.1 | 78.5 | 67.8 | 65.8 | 1049 |
| | Heat resistance | Tg [°C] | 83.6 | 84.3 | 85.5 | 86.3 | 85.9 | 89.7 |
| | Spectrocolorimeter (2 mm) | YI | 3.32 | 3.35 | 3.09 | 3.15 | 3.80 | 3.30 |

As shown in Table 2, it has been confirmed, among Examples 101 to 106, that the viscosity of the polymerizable composition is reduced and the pot life of the polymerizable composition is further improved in Examples 101 to 105 in each of which the polymerizable composition contains a Lewis acid compound, as compared to Example 106 in which the polymerizable composition does not contain a Lewis acid compound.

The disclosures of Japanese Patent Application No. 2021-017406 filed on February 5, 2021 and Japanese Patent Application No. 2021-124416 filed on July 29, 2021 are incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

## Claims

1. A polymerizable composition comprising:
an episulfide compound represented by the following Formula (1);
a polyiso(thio)cyanate compound;
a polythiol compound; and
an epoxy compound (X) which contains one or more epoxy groups within one molecule, and which does not contain an episulfide group: 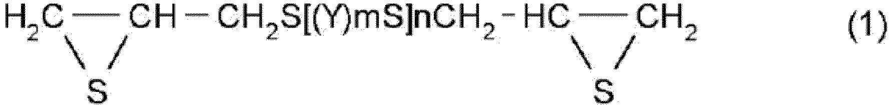
wherein, in Formula (1), Y represents a substituted or unsubstituted linear hydrocarbon group having from 1 to 4 carbon atoms, a substituted or unsubstituted branched hydrocarbon group having from 2 to 4 carbon atoms, a substituted or unsubstituted cyclic hydrocarbon group having from 3 to 6 carbon atoms, a substituted or unsubstituted 1,4-dithiane group, a substituted or unsubstituted arylene group, or a substituted or unsubstituted aralkylene group; m represents an integer from 0 to 2; and n represents an integer from 0 to 3.

2. The polymerizable composition according to claim 1, wherein the epoxy compound (X) comprises an epoxy compound (X1) which contains two or more epoxy groups within one molecule.

3. The polymerizable composition according to claim 1 or claim 2, wherein a ratio (M_{S} - M_{N})/M_{E} is more than 0 but equal to or less than 0.20, when:
a total number of moles of mercapto groups contained in a total amount of the polythiol compound is defined as Ms;
a total number of moles of iso(thio)cyanate groups contained in a total amount of the polyiso(thio)cyanate compound is defined as M_{N}; and
a total number of moles of episulfide groups contained in a total amount of the episulfide compound represented by Formula (1) is defined as M_{E}.

4. The polymerizable composition according to any one of claims 1 to 3, wherein the polythiol compound comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11 -dimercapto-3,6,9-trithiaundecane, 4-mercaptomethyl-1,8-dimercapto-3,6-dithiaoctane, 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

5. The polymerizable composition according to any one of claims 1 to 4, wherein the polyiso(thio)cyanate compound comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

6. The polymerizable composition according to any one of claims 1 to 5, further comprising a compound represented by the following Formula (2):
(R¹)₄Y⁺X⁻ (2)
wherein, in Formula (2), each of four R¹s independently represents a linear hydrocarbon group having from 1 to 10 carbon atoms or a branched hydrocarbon group having from 3 to 10 carbon atoms; X represents a halogen atom; and Y represents a nitrogen atom or a phosphorus atom.

7. The polymerizable composition according to any one of claims 1 to 6, further comprising a tertiary amine compound.

8. The polymerizable composition according to claim 7, wherein the tertiary amine compound comprises at least one of a compound represented by the following Formula (3) or a compound represented by the following Formula (4): 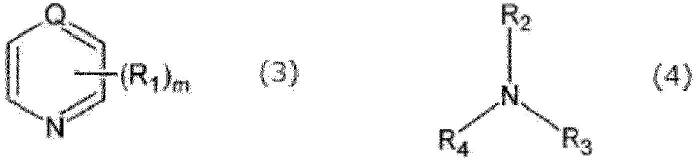
wherein, in Formula (3), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom, a nitrogen atom, or an oxygen atom; and m represents an integer from 0 to 5; and
wherein, in Formula (4), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group; and R₂ and R₃ may be bonded to each other to form a ring.

9. The polymerizable composition according to claim 8,
wherein the compound represented by Formula (3) is at least one selected from the group consisting of 2-methylpyrazine, pyridine, α-picoline, β-picoline, γ-picoline, 2,6-lutidine, 3,5-lutidine, 2,4,6-trimethylpyridine, 3-chloropyridine, 2-ethylpyridine, and 3-ethylpyridine; and
wherein the compound represented by Formula (4) is at least one selected from the group consisting of triallylamine and trioctylamine.

10. The polymerizable composition according to any one of claims 1 to 9, further comprising a Lewis acid compound.

11. The polymerizable composition according to claim 10, wherein the Lewis acid compound comprises a compound represented by the following Formula (5):
(R₄)_{c}-Sn-X_{4-c} (5)
wherein, in Formula (5), R₄ represents an alkyl group having from 1 to 4 carbon atoms; X represents a fluorine atom, a chlorine atom, a bromine atom, or -O-C(=O)-Rs wherein R₅ represents an alkyl group having from 1 to 11 carbon atoms; and c represents an integer from 1 to 3.

12. The polymerizable composition according to claim 11, wherein the compound represented by Formula (5) is at least one selected from the group consisting of dimethyltin dichloride, dibutyltin dichloride, and dibutyltin dilaurate.

13. A resin which is a cured product of the polymerizable composition according to any one of claims 1 to 12.

14. A formed body comprising the resin according to claim 13.

15. An optical material comprising the resin according to claim 13.

16. A lens comprising the resin according to claim 13.
